# EUROPEAN PATENT APPLICATION

(11) **EP 4 624 617 A1**
(43) Date of publication of application: **01.10.2025**
(21) Application number: 23894651.1
(22) Date of filing: 22.11.2023
(51) Int. Cl.: C22C 38/00, B23K 26/364, C21D 8/12, C22C 38/34, C22C 38/60, H01F 1/147

(54) **GRAIN-ORIENTED ELECTRICAL STEEL SHEET**

(30) Priority: 22.11.2022 JP 2022186167
(71) Applicant: NIPPON STEEL CORPORATION, Chiyoda-ku Tokyo 100-8071 (JP)
(72) Inventor: MOGI Hisashi, Tokyo 100-8071 (JP); IWAKI Masataka, Tokyo 100-8071 (JP); WADA Naoki, Tokyo 100-8071 (JP); TAKAHASHI Masaru, Tokyo 100-8071 (JP)
(74) Representative: Vossius & Partner Patentanwälte Rechtsanwälte mbB
(86) International application number: PCT/JP2023/042058
(87) International publication number: WO 2024/111647

(57) **Abstract**

This grain-oriented electrical steel sheet includes a steel sheet having a surface in which a plurality of grooves extending in a direction intersecting a rolling direction and having a depth in a sheet thickness direction are formed. In a cross section of the steel sheet parallel to the rolling direction and parallel to the sheet thickness direction, when a range of 40 µm from an inlet portion of the groove in a direction perpendicular to the sheet thickness direction and opposite to a center of the groove in a width direction is defined as a groove edge portion, in a plurality of the cross sections, a number proportion of projections in which a height is 2.0 µm or more and less than 6.0 µm, among projections at the groom edge portion, is 10% or more and less than 40%, and a brush mark in which a width is 4 to 25 µm and a depth is 4 µm or less is present on 10% or more and less than 80% in an area percentage of the groove edge portion as viewed from the top.

## Description

### TECHNICAL FIELD

The present invention relates to a grain-oriented electrical steel sheet.

Priority is claimed on Japanese Patent Application No. 2022-186167, filed November 22, 2022, the content of which is incorporated herein by reference.

### BACKGROUND ART

A grain-oriented electrical steel sheet is a soft magnetic material, and is mainly used as a core material of a transformer. Thus, the grain-oriented electrical steel sheet is required to have magnetic characteristics such as high magnetization characteristics and a low iron loss.

The iron loss is a power loss due to thermal energy consumption that occurs in a case where a core is excited by an AC magnetic field, and the iron loss is required to be as low as possible from the viewpoint of energy saving. The level of the iron loss is affected by the magnetic susceptibility, the sheet thickness, the coating tension, the impurity amount, the electric resistivity, the crystal grain size, the magnetic domain size, and the like. Even at present when various techniques have been developed regarding the grain-oriented electrical steel sheet, research and development for reducing the iron loss is being continued in order to increase energy efficiency.

A technique for performing laser irradiation has been proposed as one of methods for reducing the iron loss. In this technique, strain is introduced to a surface by the laser irradiation, and an interval between 180° magnetic walls is narrowed. As a result, an eddy-current loss that is part of the iron loss can be reduced.

For example, Patent Document 1 discloses a method for manufacturing a grain-oriented electrical steel sheet in which a magnetic domain is controlled by irradiation with a laser beam. The method includes a step of irradiating a surface of the grain-oriented electrical steel sheet with a condensed continuous wave laser beam while scanning the surface in a direction inclined from a rolling direction of the grain-oriented electrical steel sheet, and a step of repeating a portion scanned with the continuous wave laser beam while shifting the portion at a predetermined interval. When an average power of the continuous wave laser beam is represented as P (W), the scanning speed is represented as Vc (mm/s), the predetermined interval is represented as PL (mm), and an input energy Ua is defined as Ua = P/(Vc × PL) (mJ/mm²), 1.0 mm ≤ PL ≤ 3.0 mm, and 0.8 mJ/mm² ≤ Ua ≤ 2.0 mJ/mm² are satisfied.

Patent Document 1 discloses that iron losses in both directions of an L direction and a C direction of the grain-oriented electrical steel sheet can be reduced easily while ensuring high productivity.

However, as described above, in a case where the groove is formed by the laser irradiation, a melt generated by the laser irradiation is solidified at a groove edge portion or the like to form a projection. When such a projection is present, magnetic characteristics deteriorates.

To solve such a problem, controlling the height of the projection has been proposed.

For example, Patent Document 2 discloses a grain-oriented silicon steel on which laser scribing of anti-stress relieving is performed. Parallel linear scribed grooves are formed on one surface or both surfaces of the grain-oriented silicon steel by a laser scribing method, and the linear scribed grooves are perpendicular to or form an angle with a rolling direction of a steel sheet. A maximum height of a projection at an edge portion of the linear scribed groove is 5 µm or less, a maximum height of a spattered material in a region without scribing between adjacent linear scribed grooves is 5 µm or less, a ratio of an area occupied by the spattered material per unit area is 5% or less, and a line roughness Ra of a center line of a bottom portion of the linear scribed groove is 2.1 µm or less.

Patent Document 2 discloses that, in a case where the height of the projection at the edge portion exceeds 5 µm, since a space factor decreases to 95% or less, and a manufacturing process requirement of a transformer core cannot be satisfied, it is necessary to control the height of the projection at the edge portion of the scribe groove to 5 µm or less.

Patent Document 3 discloses a grain-oriented electrical steel sheet that includes a steel sheet including a sheet surface in which a groove whose extending direction intersects a rolling direction and whose depth direction is parallel to a sheet thickness direction is formed. Melt solidified materials continuous in parallel with the groove are present on both sides of the groove on the surface of the steel sheet. When a height having a maximum frequency in a height distribution of height data obtained by measuring the sheet surface in a specific region including the groove at regular intervals is an imaginary plane, the space of a recessed portion recessed from the imaginary plane is V1, and the volume of a protrusion protruding from the imaginary plane is V2, a value of V2/V1 is more than 0.10 and less than 0.80. A plurality of projections are formed in the specific region, and the width of a projection closest to the groove among the plurality of projections is larger than a width of another projection. When a region having the highest average height in the extending direction in the height distribution is viewed in a longitudinal groove cross-section including the extending direction and the sheet thickness direction, an average roughness Ra of a roughness curve forming a surface of the region is 0.30 to 2.00 µm, and an average length RSm of a roughness curve element forming the surface of the region is 10 to 150 µm.

In addition, Patent Document 3 discloses that, when the surface roughness parameters (Ra and RSm) are within the above range, since film breakdown due to stress concentration on the film is avoided, the height of the maximum height portion of a projection T, in which insulation properties are not easily secured, is reduced, the insulation properties are also improved. Further, since fluctuation in a width of the projection T is also reduced, the maximum width of the projection width, which is expected to limit an obstacle effect of the domain wall movement, is reduced, and the magnetic properties are improved.

### Citation List

### Patent Document

Patent Document 1: Japanese Patent No. 4669565
Patent Document 2: Japanese Patent No. 6884875
Patent Document 3: Japanese Patent No. 6569803

### SUMMARY OF INVENTION

### Technical Problem

In the techniques of Patent Documents 2 and 3, certain effects can be obtained. However, it cannot be said that the effects obtained by Patent Documents 2 and 3 are sufficient for high demands in recent years.

Thus, an object of the present invention is to provide a grain-oriented electrical steel sheet having a lower iron loss than in the related art in a grain-oriented electrical steel sheet in which a groove is formed by irradiation with a laser or the like to perform magnetic domain refinement.

### Solution to Problem

The present inventors have studied the method for reducing the iron loss in the grain-oriented electrical steel sheet in which the groove is formed by the irradiation with the laser or the like to perform the magnetic domain refinement.

As a result, the present inventors have found that the space factor at the time of laminating the steel sheets can be improved by controlling the shape and amount of the projections formed on the surface around the groove. Further, the present inventors have found that the iron loss is further reduced by forming uniform irregularities (brush marks) on the surface by the brush. Non-uniform spattering marks are formed by the laser irradiation, and uniformity cannot be controlled simply by controlling Ra or the like. Thus, it is considered that there is room for improvement in the iron loss reduction effect in the technique of the related art.

The present invention has been made in view of the above findings. The gist of the present invention is as follows.
[1] A grain-oriented electrical steel sheet according to an aspect of the present invention includes a steel sheet having a surface in which a plurality of grooves extending in a direction intersecting a rolling direction and having a depth in a sheet thickness direction are formed. In a cross section of the steel sheet parallel to the rolling direction and parallel to the sheet thickness direction, when a range of 40 µm from an inlet portion of the groove in a direction perpendicular to the sheet thickness direction and opposite to a center of the groove in a width direction is defined as a groove edge portion, in a plurality of the cross sections, a number proportion of projections in which a height is 2.0 µm or more and less than 6.0 µm, among projections at the groom edge portion, is 10% or more and less than 40%, and a brush mark in which a width is 4 to 25 µm and a depth is 4 µm or less is present on 10% or more and less than 80% in an area percentage of the groove edge portion as viewed from the top.
[2] In the grain-oriented electrical steel sheet according to [1], a forsterite film may be formed on the surface of the steel sheet.
[3] In the grain-oriented electrical steel sheet according to [2], an insulating coating may be formed on a surface of the forsterite film.
[4] In the grain-oriented electrical steel sheet according to [1], an insulating coating may be formed on the surface of the steel sheet.

### Advantageous Effects of Invention

According to the above aspect of the present invention, it is possible to provide the grain-oriented electrical steel sheet having the low iron loss (in particular, having the low iron loss in the case of the core).

### BRIEF DESCRIPTION OF DRAWINGS

FIG. 1A is a diagram illustrating an example of a cross section including a groove parallel to a rolling direction and parallel to a sheet thickness direction of a grain-oriented electrical steel sheet according to the present embodiment.
FIG. 1B is a diagram illustrating an example of a cross section including a groove parallel to a rolling direction and parallel to a sheet thickness direction of a grain-oriented electrical steel sheet of the related art.
FIG. 2 is a diagram illustrating a relationship between a height of a projection and an iron loss of a core when a number proportion of projections having a predetermined height is 25%.
FIG. 3 is a diagram illustrating a relationship between a number proportion of projections in which a height is 2.0 µm or more and less than 6.0 µm among projections and the iron loss of the core.

### DESCRIPTION OF EMBODIMENTS

Hereinafter, a grain-oriented electrical steel sheet according to an embodiment of the present invention will be described.

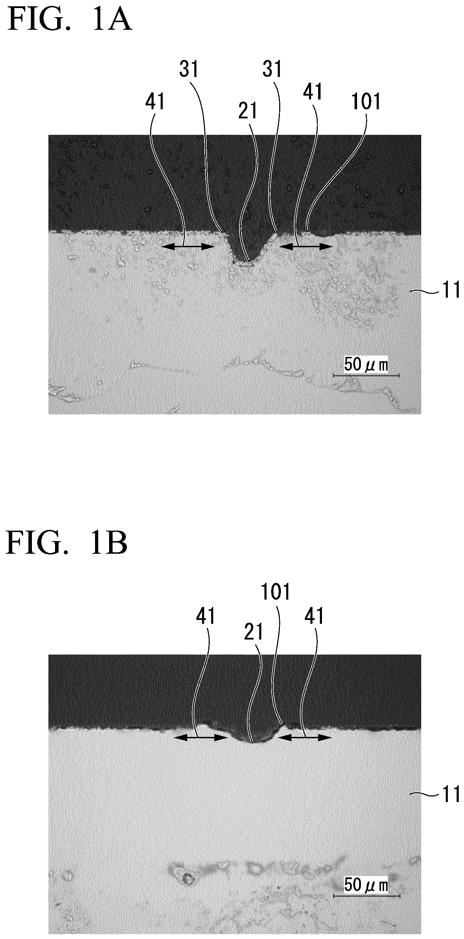

As illustrated in FIG. 1A, the grain-oriented electrical steel sheet according to the present embodiment includes a steel sheet (base steel sheet) 11 having a surface in which a plurality of grooves 21 extending in a direction intersecting a rolling direction RD and having a depth in a sheet thickness direction is formed. The steel sheet 11 is, for example, a cold rolled sheet subjected to cold rolling.

A forsterite film or an insulating coating may be formed on the surface of the steel sheet 11.

In addition, the insulating coating may be formed on a surface of the forsterite film.

That is, the grain-oriented electrical steel sheet according to the present embodiment may be made of not only a steel sheet (base steel sheet) but also a base steel sheet and a forsterite film formed on a surface of the base steel sheet, may be made of a base steel sheet and an insulating coating formed on a surface of the base steel sheet, or may be made of a base steel sheet, a forsterite film formed on a surface of the base steel sheet, and an insulating coating formed on a surface of the forsterite film.

The forsterite film and the insulating coating may be formed on one surface or may be formed on both surfaces.

Hereinafter, both the above cases will be described.

In the following embodiment, as illustrated in FIG. 1A, in a cross section of the steel sheet 11 included in the grain-oriented electrical steel sheet, which is parallel to the rolling direction RD and parallel to the sheet thickness direction, a range of 40 µm from an inlet portion 31 of the groove in a direction perpendicular to the sheet thickness direction and opposite to a center of the groove 21 in a width direction will be described as a groove edge portion 41. In addition, in the present embodiment, a protrusion in which a length of a base present in the groove edge portion 41 is 10 µm or more and a height is 1.0 µm or more is defined as a projection 101.

### [Steel sheet (base steel sheet)]

### (Groove)

The steel sheet has the groove extending in the direction intersecting the rolling direction and having the depth in the sheet thickness direction, which is formed by laser irradiation, in the surface thereof.

Magnetic domain refinement can be performed by forming a linear groove in the direction intersecting the rolling direction. In the grain-oriented electrical steel sheet according to the present embodiment, the groove is formed on the surface of the steel sheet (base steel sheet) in order to obtain this effect.

In the present embodiment, the direction intersecting the rolling direction is a direction of 75 to 105° with respect to the rolling direction.

The shape of the groove is not limited as long as the effect of the magnetic domain refinement can be obtained, but, for example, a depth is 4.0 to 40.0 µm and the width of the groove is 20.0 to 400.0 µm. Among the plurality of grooves, an interval between adjacent grooves in the rolling direction is preferably 2 to 20 mm. The plurality of grooves are preferably formed at substantially regular intervals (periodically) in the rolling direction. The interval between the grooves is a distance from a center of the groove in a width direction to a center of an adjacent groove in the width direction.

### (Groove edge portion)

In the grain-oriented electrical steel sheet according to the present embodiment, when a plurality of cross sections of the steel sheet parallel to the rolling direction and parallel to the sheet thickness direction are observed and a plurality of groove edge portions are observed, a number proportion of projections in which a height is 2.0 µm or more and less than 6.0 µm is 10% or more and less than 40% among the observed projections. Here, in the present embodiment, a protrusion in which the length of the base is 10 µm or more and the height is 1.0 µm or more is defined as the projection.

The reason why the number proportion of the projections in which the height is 2.0 µm or more and less than 6.0 µm (the length of the base is 10 µm or more) is set as a control target is that when there are the projections in which the height is 2.0 µm or more, a magnetic domain is refined (a magnetic domain width is reduced) by a stress induced by the projection, and an effect of reducing an iron loss can be obtained. However, when the height of the projection is 6.0 µm or more, a space factor at the time of manufacturing a core decreases, and there is a concern that an iron loss of the core increases (iron loss characteristics deteriorate).

In addition, even though there are the projections in which the height is 2.0 µm or more and less than 6.0 µm, when the number proportion of the projections in which the height is 2.0 µm or more and less than 6.0 µm among the certain number of projections is less than 10%, the effect cannot be sufficiently obtained.

On the other hand, when the number proportion of the projections in which the height is 2.0 µm or more and less than 6.0 µm is 40% or more, the iron loss of the core increases due to the decrease in the space factor.

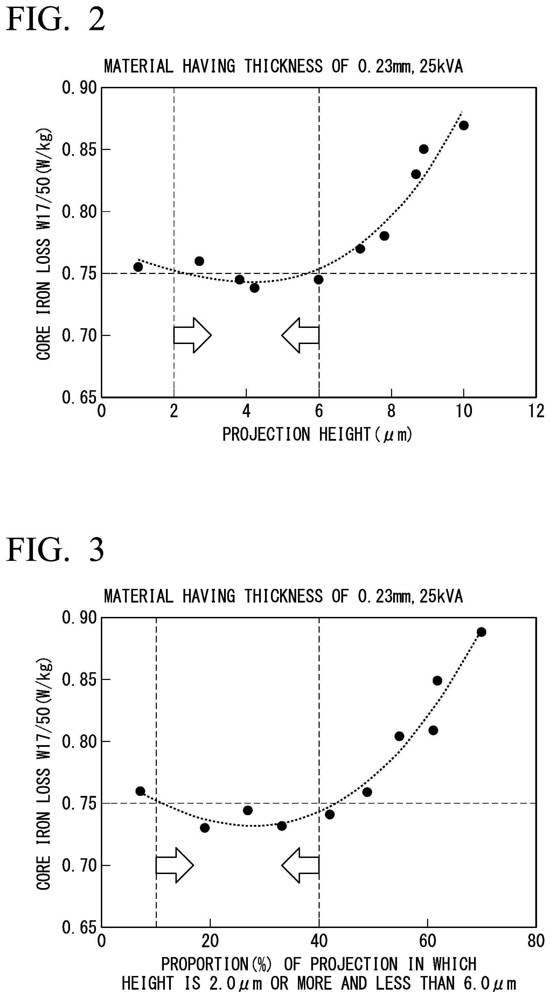

FIGS. 2 and 3 illustrate values of the iron loss (W17/50) of the core manufactured by using the grain-oriented electrical steel sheet in which the projection height and the number proportion of the projections in which the height is 2.0 µm or more and less than 6.0 µm are changed.

It can be seen that the iron loss of the core is reduced by setting the projection height and an existence rate (a proportion) of predetermined projections to be in a predetermined range.

A maximum height of the projection observed at the plurality of groove edge portions is preferably less than 6.0 µm. That is, it is preferable that the number proportion of the projections in which the height is 2.0 µm or more and less than 6.0 µm is 10 to 40% and heights of the other projections are less than 2.0 µm.

In addition, in the grain-oriented electrical steel sheet according to the present embodiment, when the steel sheet is viewed from above (observed from a direction perpendicular to the surface of the steel sheet), brush marks in which a width is 4 to 25 µm and a depth is 4 µm or less are present on 10% or more and less than 80% of the groove edge portion in terms of area percentage.

In a case where the grooves are formed by the laser irradiation, non-uniform spattering marks are formed at the groove edge portion. In the present embodiment, the surface of the steel sheet is ground by a brush (brush roll), and a distribution of non-uniform irregularities such as the spattering marks is set to be uniform by the brush. In addition, the height of the projection is also controlled by this grinding.

As will be described later, since the brush roll is generally disposed so as to rotate in a direction facing a transfer direction of the steel sheet, the brush marks are provided so as to extend in the rolling direction.

When an existence rate of the brush marks is less than 10%, a sufficient effect cannot be obtained. On the other hand, when the rate of the brush marks is 80% or more, surface roughness is excessively increased, and the movement of the domain wall affecting the magnetic characteristics is hindered. As a result, the magnetic characteristics deteriorate.

In addition, when a width of the brush mark is less than 4 µm, the movement of the 180° domain walls is hindered, and the iron loss increases. On the other hand, when the width exceeds 25 µm, since electrostatic energy of the surface does not increase, an interval between the 180° magnetic domain walls is not narrowed, and the effect of reducing the iron loss cannot be obtained.

In addition, when a depth of the brush mark exceeds 4 µm, the domain wall movement is further hindered, and the increase in the iron loss increases.

Unlike the projection, there is no deposit in the sheet thickness direction, and thus, the brush marks do not affect each other even in a case where the grain-oriented electrical steel sheets are laminated to manufacture the core.

The existence rate of the projections and the existence rate of the brush marks can be measured by the following method by using an optical microscope.

The grain-oriented electrical steel sheet is cut such that a cross section in a sheet thickness direction perpendicular to the groove can be observed, and a range of 2.6 mm in the rolling direction is captured at a magnification of 300 times by using an optical microscope to determine the presence or absence of the protrusion in which the length of the base (length on an extension line of the surface at the groove edge portion) is 10 µm or more, and the height of the protrusion (distance from the base at a position of a longest distance in the direction perpendicular to the base) is measured in a case where there is the protrusion. As a result of the measurement, when the height is 1.0 µm or more, it is determined that there is the projection. This observation is performed at 5 or more points, the number of projections and the number of projections in which the height is 2.0 µm or more and less than 6.0 µm among the projections are counted in each observed visual field, and the number proportion of projections in which the height is 2.0 µm or more and less than 6.0 µm is calculated from these numbers.

In addition, at this time, the width and depth of the groove can also be measured.

In addition, the grain-oriented electrical steel sheet is cut at the groove edge portion near the groove such that a sheet thickness direction cross-section in a direction parallel to the groove can be observed, and a range of 2.6 mm in the rolling direction is captured at a magnification of 300 times by using an optical microscope to determine whether there is the brush mark having the width of 4 to 25 µm and the depth of 4 µm or less.

Since the brush marks are formed substantially uniformly, when the grain-oriented electrical steel sheet is viewed from above, a range of 2.0 mm in the width direction and 2.6 mm around the groove in the rolling direction is observed, and an area of the groove edge portion on which irregularities similar to the irregularities determined to be the brush marks are formed is measured to determine a percentage to the area of the groove edge portion.

In the measurement of the area percentage of the brush marks, in a case where the forsterite film or the insulating coating is formed on the surface, the area percentage is measured after these films are removed.

### (Chemical composition)

A chemical composition of the base steel sheet is not particularly limited as long as a chemical composition thereof is equivalent to a chemical composition of a base steel sheet of a known grain-oriented electrical steel sheet. In the chemical composition of the base steel sheet, for example, it is preferable that the base steel sheet contains, in mass%, Si: 0.80% to 7.00%, C: more than 0% and 0.085% or less, acid-soluble Al: 0% to 0.065%, N: 0% to 0.0120%, Mn: 0% to 1.00%, Cr: 0% to 0.30%, Cu: 0% to 0.4%, P: 0% to 0.5%, Sn: 0% to 0.3%, Sb: 0% to 0.3%, Ni: 0% to 1%, S: 0% to 0.015%, and Se: 0% to 0.015%, and the remainder is Fe and impurities.

In a case where the grain-oriented electrical steel sheet according to the present embodiment includes only the steel sheet (base steel sheet), it can be said that the chemical composition of the base steel sheet of the grain-oriented electrical steel sheet is the chemical composition of the grain-oriented electrical steel sheet.

The chemical composition of the base steel sheet is obtained by a well-known component analysis method. Specifically, swarf is generated from the base steel sheet using a drill, the swarf is collected, and the collected swarf is dissolved in an acid to obtain a solution. The solution is subjected to ICP-AES to perform elemental analysis of the chemical composition.

However, Si which is difficult to measure by the ICP-AES is obtained by a method (silicon quantitative method) defined in JIS G 1212 (1997). Specifically, when the above-described swarf is dissolved in an acid, silicon oxide is separated as a precipitate, and thus the precipitate (silicon oxide) is filtered with filter paper, and the mass is measured to determine the Si content.

In addition, the C content and the S content were determined by a well-known high frequency combustion method (combustion-infrared absorption method). Specifically, optionally, the above-described solution is combusted by high-frequency heating in an oxygen stream, and generated carbon dioxide and sulfur dioxide are detected to obtain the C content and the S content.

In addition, the N content is obtained using a well-known inert gas melting-thermal conductivity method.

In a case where the forsterite film and/or the insulating coating are formed on the surface, the measurement can be performed after these films are removed.

Specifically, in a case where the insulating coating is formed, the insulating coating is removed by immersing the grain-oriented electrical steel sheet having the insulating coating in a sodium hydroxide aqueous solution at 80 to 90°C containing 30 to 50 mass% of NaOH and 50 to 70 mass% of H₂O for 7 to 10 minutes. The grain-oriented electrical steel sheet from which the insulating coating is removed is washed with water, and is dried with a warm air blower for slightly less than 1 minute after water washing.

In a case where the forsterite film is formed, the grain-oriented electrical steel sheet having the forsterite film is immersed in a hydrochloric acid aqueous solution containing 30 to 40 mass% of HCl and at 80 to 90°C for 1 to 10 minutes to remove the forsterite film. The base steel sheet after immersion is washed with water, and is dried with a warm air blower for slightly less than 1 minute after water washing.

Through the above steps, the base steel sheet can be taken out from the grain-oriented electrical steel sheet on which the forsterite film and/or the insulating coating is formed.

### (Sheet thickness)

A sheet thickness of the base steel sheet of the grain-oriented electrical steel sheet according to the present embodiment is not limited, but is preferably 0.15 to 0.40 mm in consideration of the iron loss.

### [Forsterite film]

In the grain-oriented electrical steel sheet according to the present embodiment, the forsterite film may be formed on the surface of the steel sheet which is the base steel sheet.

The forsterite film is an inorganic coating containing magnesium silicate as a main component. The forsterite film is formed by reaction of an annealing separator containing magnesia (MgO) applied to the surface of the base steel sheet with a component of the surface of the base steel sheet in final annealing, and has a composition (more specifically, a composition containing Mg₂SiO₄ as a main component) derived from the annealing separator and the component of the base steel sheet.

On the other hand, in a case where an annealing separator mainly containing Al₂O₃ is used in the final annealing, the forsterite film may not be formed.

### [Insulating coating]

In the grain-oriented electrical steel sheet according to the present embodiment, the insulating coating may be formed on the surface of the base steel sheet or the surface of the forsterite film.

The insulating coating imparts electrical insulation properties to the grain-oriented electrical steel sheet, reduce the eddy-current loss, and thus improves the iron loss properties of the grain-oriented electrical steel sheet. The insulating coating has a function of applying a tension to the grain-oriented electrical steel sheet. The tension is applied to the grain-oriented electrical steel sheet, the domain wall movement in the grain-oriented electrical steel sheet is facilitated, and thus, the iron loss of the grain-oriented electrical steel sheet can be improved.

In addition, according to the insulating coating, various properties such as corrosion resistance, heat resistance, and slippage can be obtained in addition to the electrical insulation properties as described above.

In the grain-oriented electrical steel sheet according to the present embodiment, the insulating coating may be, for example, a known coating formed by applying a coating solution containing phosphate (phosphate) and colloidal silica as main components to the surface of the forsterite film and baking the coating solution.

### <Manufacturing method>

An effect of the grain-oriented electrical steel sheet according to the present embodiment can be obtained regardless of the manufacturing method as long as the grain-oriented electrical steel sheet has the above-described characteristics, but a manufacturing method including the following steps is preferable as long as such a manufacturing method enables stable manufacture.
(I) A hot rolling step of heating and hot rolling a slab having a predetermined chemical composition to form a hot rolled sheet,
(II) A hot-rolled sheet annealing step of annealing the hot rolled sheet after the hot rolling step,
(III) A cold rolling step of pickling and cold rolling the hot rolled sheet after the hot-rolled sheet annealing step to obtain a steel sheet (cold rolled sheet),
(IV) A groove forming step of forming a groove in a surface of the steel sheet after the cold rolling step by performing laser irradiation on the surface and removing a melt generated by the laser irradiation from the surface by an assist gas,
(V) A grinding step of grinding the surface of the steel sheet after the groove forming step by using a brush roll,
(VI) A decarburization annealing step of performing decarburization annealing on the steel sheet after the grinding step, and
(VII) A final annealing step of applying an annealing separator to the steel sheet after the decarburization annealing step and performing final annealing.

In addition, the method for manufacturing a grain-oriented electrical steel sheet according to the present embodiment may further include the following steps.

(VIII) An insulating coating forming step of forming an insulating coating on the surface of the steel sheet after the final annealing step (or a surface of a forsterite film formed on the surface of the steel sheet).

### [Hot rolling step]

In the hot rolling step, the slab having the predetermined chemical composition (the chemical composition corresponding to the chemical composition of the steel sheet (base steel sheet) of the grain-oriented electrical steel sheet according to the present embodiment) is heated and hot rolled to form the hot rolled sheet.

The conditions are not limited, and may be set in accordance with required sheet thickness and strength.

The chemical composition of the slab to be subjected to the hot rolling may be determined in consideration of a change in the chemical composition in each step in accordance with the chemical composition desired to be obtained as the grain-oriented electrical steel sheet. For example, in a case where the preferred chemical composition of the base steel sheet of the grain-oriented electrical steel sheet according to the present embodiment described above, for example, it is preferable to use the slab having the following chemical composition.

For example, it is preferable that the base steel sheet contains, in mass%, Si: 0.80% to 7.10%, C: more than 0% and 0.090% or less, acid-soluble Al: 0% to 0.070%, N: 0% to 0.0200%, Mn: 0% to 1.50%, Cr: 0% to 0.35%, Cu: 0% to 0.45%, P: 0% to 0.55%, Sn: 0% to 0.4%, Sb: 0% to 0.3%, Ni: 0% to 1%, S: 0% to 0.020%, and Se: 0% to 0.015%, and the remainder is Fe and impurities.

The method for obtaining the slab is not limited. For example, molten steel having a predetermined chemical composition may be melted and manufactured by using the molten steel. The slab may be manufactured by a continuous casting method, or an ingot may be manufactured by using the molten steel, and the slab may be manufactured by blooming-rolling the ingot. In addition, the slab may be manufactured by other methods.

A thickness of the slab is not particularly limited, and is, for example, 150 to 350 mm. The thickness of the slab is preferably 220 to 280 mm. A so-called thin slab having a thickness of 10 to 70 mm may be used.

### [Hot-rolled sheet annealing step]

In the hot-rolled sheet annealing step, the hot rolled sheet after the hot rolling step is annealed. By performing such an annealing treatment is performed, recrystallization occurs in the metallographic structure, and favorable magnetic characteristics can be realized.

In the hot-rolled sheet annealing step of the present embodiment, the hot rolled sheet manufactured through the hot rolling step may be annealed according to a known method. A technique for heating the hot rolled sheet at the time of annealing is not particularly limited, and a known heating method can be adopted. In addition, annealing conditions are also not particularly limited, but for example, the hot rolled sheet can be annealed in a temperature range of 900 to 1200°C for 10 seconds to 5 minutes.

### [Cold rolling step]

In the cold rolling step, the steel sheet (cold rolled sheet) is obtained by pickling and cold rolling the hot rolled sheet after the hot-rolled sheet annealing step. The cold rolling may be performed once (continuously performed without intervening intermediate annealing(s)). Alternatively, before the final pass in the cold rolling step, intermediate annealing may be performed at least one time or two or more times by interrupting cold rolling, that is, cold rolling may be performed several times with intervening intermediate annealing(s).

Conditions for the cold rolling may be in accordance with a known method. For example, a final rolling reduction can be in a range of 80% or more and 95% or less.

The final rolling reduction is a cumulative rolling reduction of cold rolling, and when intermediate annealing is performed, the final rolling reduction is a cumulative rolling reduction of cold rolling after the final intermediate annealing.

In a case where the intermediate annealing is performed, it is preferable to hold the intermediate annealing at a temperature of 1000 to 1200°C for 5 to 180 seconds. An annealing atmosphere is not particularly limited. The number of times of intermediate annealing is preferably three or less in consideration of manufacturing cost.

In addition, pickling may be performed under known conditions.

### [Groove forming step]

In the groove forming step, the laser irradiation is performed on the surface of the steel sheet, and the melt generated by the laser irradiation is removed from the surface by the assist gas to form the groove in the surface of the steel sheet.

The laser irradiation conditions and the injection conditions of the assist gas are not particularly limited as long as these conditions are conditions for forming the groove.

### [Grinding step]

In the grinding step, the surface of the steel sheet after the groove forming step is ground by using the brush roll. This grinding step is intended to control the height of the projection and to form the brush marks having uniform irregularities, and does not merely polish the surface of the steel sheet and smooth the surface as seen in the prior art. A grinding range may be at least the groove edge portion, but in a case where a rotation direction of the brush roll is parallel to a sheet longitudinal direction and the steel sheet is ground while being transferred, the entire steel sheet may be ground in consideration of productivity.

At the time of grinding, in order to form a predetermined brush mark, a grain size of a grindstone at a distal end of a brush bristle, a diameter of the brush bristle, a rotation speed of the brush, a rolling reduction of the brush, and the like are controlled.

Preferable conditions are, for example, a brush bristle diameter φ of more than 1.0 mm and less than 1.4 mm, and a grain size of abrasive grains of #80 (0.20 mm) to #200 (0.08 mm). The grain size of the abrasive grains used herein is different from fine abrasive grains found in the smoothing of the related art for the purpose of removing projections. In addition, the rotation speed of the brush is 700 to 2000rpm, and the rolling reduction of the brush is 2 to 8 mm. The rotation speed and the rolling reduction are also slightly higher than the rotation speed and the rolling reduction of the related art. This is because that the main target is to remove the projection.

### [Decarburization annealing step]

In the decarburization annealing step, the decarburization annealing is performed on the steel sheet after the grinding step. In this decarburization annealing, C that adversely affects magnetic characteristics is removed (decarburized) from the steel sheet, and the steel sheet is primarily recrystallized.

The decarburization annealing conditions are not limited, but the steel sheet is held at an annealing temperature of 750 to 900°C for 10 to 600 seconds in a wet hydrogen and nitrogen atmosphere.

### [Final annealing step]

In the final annealing step, the annealing separator is applied to the steel sheet after the decarburization annealing step, and the final annealing is performed.

Since the final annealing is performed after the steel sheet is coiled into a coil shape, the annealing separator is applied during the final annealing such that the steel sheet is not baked. In general, an annealing separator mainly containing MgO or Al₂O₃ is used. The final annealing is performed after applying such an annealing separator. For example, when the annealing separator containing MgO is used, a forsterite (Mg₂SiO₄) coating layer is formed. In a case where the annealing separator containing Al₂O₃ as the main component is used, the forsterite (Mg₂SiO₄) film may not be formed.

In addition, in the final annealing step, primary recrystallized grains obtained in the decarburization annealing step are secondarily recrystallized by heating to an annealing temperature to obtain crystal grains aligned in the GOSS orientation in which the rolling direction of the steel sheet is <100> direction and the sheet surface is { 110} surface, and an inhibitor and the like that adversely affect the magnetic characteristics are removed (purified) by holding the crystal grains at the annealing temperature for a predetermined time.

The conditions for the final annealing are not limited, but the final annealing may be performed, for example, under conditions that the temperature is raised to 1150 to 1250°C in an atmosphere gas containing hydrogen and nitrogen and holding is performed in the temperature range for 10 to 60 hours.

### [Insulating coating forming step]

In the insulating coating forming step, the insulating coating is formed on the steel sheet (or on the surface of the forsterite film in a case where the forsterite film is formed on the surface of the steel sheet by the final annealing) after the final annealing step.

For example, the insulating coating can be formed by applying a coating solution containing phosphoric acid or a phosphate, colloidal silica, and chromic anhydride or a chromate to the steel sheet (including the steel sheet having the forsterite film) after the final annealing, baking the coating solution at 300 to 950°C for 10 seconds or more and drying the coating solution.

Through these steps, it is possible to obtain the grain-oriented electrical steel sheet including the base steel sheet (cold rolled sheet) and the forsterite film and/or the insulating coating as necessary.

### Examples

A slab containing, in mass%, C: 0.055%, Si: 0.86 to 3.15%, Mn: 0.14%, S: 0.007%, acid-soluble Al: 0.027%, Cr: 0.12%, N: 0.0075%, the remainder being Fe and impurities, was prepared by continuous casting.

A hot rolled sheet having a sheet thickness of 2.3 to 3.0 mm was obtained by heating this slab to 1100 to 1450°C and hot rolling the slab.

Hot-rolled sheet annealing of holding the hot rolled sheet at 1120°C for 180 seconds was performed on the hot rolled sheet.

A steel sheet (cold rolled sheet) having a sheet thickness of 0.23 mm was obtained by pickling and cold rolling the hot rolled sheet after the hot-rolled sheet annealing under a condition that a final rolling reduction was 90%.

The laser irradiation was performed on the steel sheet, and a plurality of grooves extending in a direction of 80° with respect to the rolling direction were periodically formed at intervals of 4 mm in the rolling direction.

Grinding was performed on the steel sheet after the groove formation under the conditions of Table 1 by using the brush roll described in Table 1. At that time, the steel sheet was ground while being transferred such that the rotation direction of the brush roll was parallel to the sheet longitudinal direction and the portion coming into contact with the steel sheet faced the transfer direction.

The steel sheet after the grinding step was subjected to decarburization annealing in which the steel sheet was heated to 840°C and held for 150 seconds in a wet hydrogen and nitrogen atmosphere.

The annealing separator containing MgO and TiO₂ as the main component was applied to the steel sheet after the decarburization annealing step, and then the final annealing was performed under the condition of being held at 1200°C for 20 hours.

After the final annealing, the forsterite film was formed on the surface of the steel sheet.

After the final annealing, the surface of the steel sheet (steel sheet in which the forsterite film was formed on the surface of the base steel sheet) was applied with a coating solution containing chromic anhydride and aluminum phosphate as the main components, was baked by being heated to 700 to 900°C to form the insulating coating. Thus, the grain-oriented electrical steel sheet was obtained.

The chemical composition of the base steel sheet of the obtained grain-oriented electrical steel sheet was measured by the above method. As a result, in mass%, the C content was 0.014 to 0.055%, the S content was 0.001 to 0.007%, the acid-soluble Al content was 0.011 to 0.027%, and the N content was 0.0049 to 0.0075%. The Si content, the Mn content, and the Cr content did not change significantly compared to the stage of the slab.

In addition, in the obtained grain-oriented electrical steel sheet, the number proportion of the projections in which the height was 2.0 µm or more and less than 6.0 µm, among the projections at the groove edge portion, and the area percentage of the brush marks at the groove edge portion were measured by the above-described method.

In addition, the width and depth of the groove were measured together.

Tables 1 and 2 show the results.

In addition, a winding core having a capacity of 25 kVA was manufactured by using the obtained grain-oriented electrical steel sheet by a known method.

A primary winding and a secondary winding were wound around the obtained winding core, an excitation current was applied to the primary winding, and an iron loss W17/50 was measured from the current and a secondary voltage of the secondary winding with a power meter.

When the iron loss was 0.75 (W/kg) or less, it was determined that the core iron loss was low.

Table 2 shows the results.

**[Table 1]**

| No. | Grinding condition | | | | | Groove portion observation result | |
|---|---|---|---|---|---|---|---|
| | Brush bristle diameter (mm) | Abrasive grains # | | Brush rotation speed (rpm) | Brush rolling reduction (mm) | Depth (µm) | Width (µm) |
| 1 | 1.4 | 80 | (0.20 mm) | 1200 | 5.0 | 34.1 | 57.8 |
| 2 | 1.2 | 100 | (0.16 mm) | 1200 | 5.0 | 23.2 | 38.6 |
| 3 | 1.0 | 240 | (0.07 mm) | 1200 | 5.0 | 18.8 | 31.0 |
| 4 | 1.2 | 100 | (0.16 mm) | 600 | 5.0 | 20.3 | 33.2 |
| 5 | 1.2 | 100 | (0.16 mm) | 1200 | 5.0 | 25.8 | 40.1 |
| 6 | 1.2 | 100 | (0.16 mm) | 2400 | 5.0 | 18.3 | 30.3 |
| 7 | 1.2 | 100 | (0.16 mm) | 1200 | 0.5 | 19.8 | 34.4 |
| 8 | 1.2 | 100 | (0.16 mm) | 1200 | 5.0 | 24.5 | 39.5 |
| 9 | 1.2 | 100 | (0.16 mm) | 1200 | 10.0 | 17.9 | 29.9 |
| 10 | 1.2 | 100 | (0.16 mm) | 1200 | 2.1 | 23.8 | 38.2 |
| 11 | 1.2 | 100 | (0.16 mm) | 1200 | 7.0 | 21.5 | 39.5 |
| 12 | 1.2 | 100 | (0.16 mm) | 1200 | 6.0 | 21.5 | 39.5 |

**[Table 2]**

| No. | Groove edge portion observation result | | | Magnetic characteristic evaluation | Note |
|---|---|---|---|---|---|
| | Projection maximum height (µm) | Number proportion of projections in which height is 2.0 µm or more and less than 6.0 µm (%) | Brush mark area percentage (%) | Iron loss W17/50 (W/kg) | |
| 1 | 1.5 | 0 | 68 | 0.78 | Comparative Example |
| 2 | 4.1 | 27 | 72 | 0.72 | Invention Example |
| 3 | 7.5 | 45 | 65 | 0.81 | Comparative Example |
| 4 | 6.3 | 39 | 81 | 0.83 | Comparative Example |
| 5 | 4.1 | 27 | 70 | 0.72 | Invention Example |
| 6 | 1.7 | 0 | 76 | 0.77 | Comparative Example |
| 7 | 8.0 | 54 | 9 | 0.82 | Comparative Example |
| 8 | 4.1 | 27 | 65 | 0.72 | Invention Example |
| 9 | 0.9 | 0 | 81 | 0.79 | Comparative Example |
| 10 | 4.3 | 25 | 12 | 0.73 | Invention Example |
| 11 | 3.9 | 11 | 78 | 0.74 | Invention Example |
| 12 | 3.9 | 38 | 76 | 0.74 | Invention Example |

As can be seen from Tables 1 and 2, in an example in which the number proportion of the projections in which the height was 2.0 µm or more and less than 6.0 µm and the area percentage of the brush marks at the groove edge portion were within the scope of the present invention, the core iron loss was low. On the other hand, in an example in which the grinding condition was out of the preferable range, the number proportion of the projections in which the height was 2.0 µm or more and less than 6.0 µm or the area percentage of the brush marks at the groove edge portion was out of the scope of the present invention, and as a result, the core iron loss was also high.

### INDUSTRIAL APPLICABILITY

According to the present invention, it is possible to provide the grain-oriented electrical steel sheet having the low iron loss (in particular, having the low iron loss in the case of the core). Thus, industrial applicability is high.

### REFERENCE SIGNS LIST

11 Steel sheet (base steel sheet)
21 Groove
31 Inlet portion of groove
41 Groove edge portion
101 Projection
RD Rolling direction
TD Sheet width direction

## Claims

1. A grain-oriented electrical steel sheet comprising:
a steel sheet having a surface in which a plurality of grooves extending in a direction intersecting a rolling direction and having a depth in a sheet thickness direction are formed,
wherein, in a cross section of the steel sheet parallel to the rolling direction and parallel to the sheet thickness direction, when a range of 40 µm from an inlet portion of the groove in a direction perpendicular to the sheet thickness direction and opposite to a center of the groove in a width direction is defined as a groove edge portion,
in a plurality of the cross sections, a number proportion of projections in which a height is 2.0 µm or more and less than 6.0 µm, among projections, at the groom edge portion, is 10% or more and less than 40%, and
a brush mark in which a width is 4 to 25 µm and a depth is 4 µm or less is present on 10% or more and less than 80% in an area percentage of the groove edge portion as viewed from the top.

2. The grain-oriented electrical steel sheet according to claim 1, wherein
a forsterite film is formed on the surface of the steel sheet.

3. The grain-oriented electrical steel sheet according to claim 2, wherein
an insulating coating is formed on a surface of the forsterite film.

4. The grain-oriented electrical steel sheet according to claim 1, wherein
an insulating coating is formed on the surface of the steel sheet.
